(19) Europäisches Patentamt
European Patent Office
Office européen des brevets

(11) **EP 2 589 941 B1**

(12) **EUROPÄISCHE PATENTSCHRIFT**

(45) Veröffentlichungstag und Bekanntmachung des Hinweises auf die Patenterteilung:
**21.09.2016 Patentblatt 2016/38**

(51) Int Cl.:
***G01K 1/20*** *(2006.01)*      ***G01D 3/028*** *(2006.01)*

(21) Anmeldenummer: **12176513.5**

(22) Anmeldetag: **16.07.2012**

(54) **Verfahren und Vorrichtung zur Temperaturkompensation von mindestens einer temperaturabhängigen Messgröße**

Method and device for compensating for the temperature of at least one temperature-dependent parameter

Procédé et dispositif destinés à la compensation de la température d'au moins une grandeur de mesure dépendant de la température

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.07.2011 DE 102011107973**

(43) Veröffentlichungstag der Anmeldung:
**08.05.2013 Patentblatt 2013/19**

(73) Patentinhaber: **Valeo Schalter und Sensoren GmbH**
**74321 Bietigheim-Bissingen (DE)**

(72) Erfinder: **Lägler, Andreas**
**74389 Cleebronn (DE)**

(56) Entgegenhaltungen:
**DE-A1-102005 006 859**     **DE-A1-102007 000 407**
**US-A1- 2008 099 042**

**Beschreibung**

Die Erfindung betrifft ein Verfahren zur Temperaturkompensation von mindestens einer temperaturabhängigen Messgröße der im Oberbegriff des Anspruchs 1 genannten Art, sowie eine korrespondierende Vorrichtung zur Temperaturkompensation von mindestens einer temperaturabhängigen Messgröße der im Oberbegriff des Anspruchs 7 genannten Art.

Aus dem Stand der Technik sind Verfahren zur Temperaturkompensation von mindestens einer temperaturabhängigen Messgröße, wie beispielsweise einer Feuchtigkeit und/oder Temperatur auf bzw. an einer Windschutzscheibe bekannt. Eine solche Messvorrichtung ist üblicherweise im Bereich der Windschutzscheibe angebracht und umfasst in der Regel mehrere Sensoren zur Erfassung der Messgrößen sowie eine Auswerte- und Steuereinheit zur Auswertung der Sensordaten.

In der Offenlegungsschrift DE 199 07 401 A1 wird beispielsweise ein Verfahren zur Verhinderung von Scheibenbeschlag in einem Kraftfahrzeug beschrieben. Bei dem beschriebenen Verfahren wird eine sich auf einer Scheibe niederschlagende relative Feuchtigkeit von einem Feuchtesensor als eine relative Feuchte gemessen. Des Weiteren wird ein der gemessenen Feuchte entsprechendes Feuchtesignal einer Auswerte und Steuereinheit zugeführt, welche beispielsweise eine Belüftungsanlage aktiviert. Um die Fahrsicherheit zu erhöhen, indem zuverlässig bei allen klimatischen Bedingungen und unabhängig von der Sonneneinstrahlung ein Beschlagen der Scheiben rechtzeitig erkannt wird, wird der Auswerte- und Steuereinheit ein Signal eines Solarsensors zugeführt, welches der Intensität der einfallenden Sonneneinstrahlung entspricht. Aus diesem Signal wird die Erwärmung des Feuchtesensors bestimmt. Aus der Erwärmung und der gemessenen relativen Feuchte wird dann die tatsächliche relative Feuchtigkeit an der Scheibenoberfläche bestimmt.

In der Offenlegungsschrift DE 10 2007 005 544 B4 wird eine Messung der relativen Luftfeuchtigkeit im Innenraum eines Fahrzeugs und eine Kalibrierung eines Feuchtesensors beschrieben. Die beschriebene Vorrichtung zur Messung der relativen Luftfeuchtigkeit und zur Kalibrierung des Feuchtesensors umfasst einen Beschlagsensor zur Detektion kondensierter Luftfeuchtigkeit, einen Temperatursensor zur Messung der Temperatur an einer Kondensationsfläche, einen Feuchtesensor zur Messung einer relativen Luftfeuchtigkeit im Innenraum des Fahrzeugs, einen Lufttemperatursensor zur Messung der Lufttemperatur und eine Auswerte- und Steuereinheit, welche die Signale aller Sensoren empfängt und auswertet. Die Auswerte- und Steuereinheit ordnet zur Kalibrierung des Feuchtesensors das Ausgangssignal des Feuchtesensors, welches aus der detektierten kondensierten Luftfeuchtigkeit resultiert, der relativen Luftfeuchtigkeit zu, welche sich rechnerisch aus den in diesem Zustand vorliegenden Ausgangssignalen des Kondensierungsflächen-Temperartursensors und des Lufttemperatursensors ergibt.

DE 10 2007 000 407 beschreibt die Korrektur des Signals eines Regensensors mithilfe einer von einem Temperatursensor gemessenen Temperatur.

US 2008/0099042 und DE 10 2005 006 859 beschreiben die Temperaturkompensation von Feuchtesensoren.

Aufgabe der Erfindung ist es, ein Verfahren zur Temperaturkompensation von mindestens einer temperaturabhängigen Messgröße und eine Vorrichtung zur Temperaturkompensation von mindestens einer temperaturabhängigen Messgröße anzugeben, welche durch Berücksichtigung von internen Störgrößen eine genaue Ermittlung der mindestens einen temperaturabhängigen Messgröße in einem geschlossen Messumfeld ermöglichen.

Diese Aufgabe wird erfindungsgemäß durch ein Verfahren zur Temperaturkompensation von mindestens einer temperaturabhängigen Messgröße mit den Merkmalen des Anspruchs 1 und durch eine Vorrichtung zur Temperaturkompensation von mindestens einer temperaturabhängigen Messgröße mit den Merkmalen des Anspruchs 7 gelöst. Weitere die Ausführungsformen der Erfindung in vorteilhafter Weise ausgestaltende Merkmale enthalten die Unteransprüche.

Der mit der Erfindung erzielte Vorteil besteht darin, dass interne Temperaturstörgrößen und deren zeitliche Verläufe ermittelt und gespeichert werden und dann als bekannte Größen bei der Ermittlung von mindestens einer temperaturkompensierten Messgröße berücksichtigt werden können. Dies ermöglicht in vorteilhafter Weise eine genauere Bestimmung der mindestens einen temperaturabhängigen Messgröße, insbesondere bei Eigenerwärmung der Sensoreinheit und/oder bei Erwärmung des Messumfelds. Die unerwünschte Erwärmung kann durch den Messvorgang selbst und/oder durch ein wärmeerzeugendes Bauteil im Messumfeld verursacht werden. In vorteilhafter Weise kann insbesondere der Zustand des wärmeerzeugenden Bauteils berücksichtigt werden, wobei das Bauteil in einem aktiven Zustand Wärme erzeugt und abgibt und in einem nicht aktiven Zustand keine Wärme erzeugt, aber unter Umständen noch Restwärme abgeben kann. Durch die Ermittlung des zeitlichen Verlaufs des Temperaturverhaltens können in vorteilhafter Weise auch eventuell vorhandene Aufwärm- und Abkühlphasen für die Temperaturkompensation berücksichtigt werden.

Der Grundgedanke der Erfindung basiert darauf, dass das zeitliche Temperaturverhalten eines die ungewollte Temperaturänderung bewirkenden Bauteils, welches innerhalb des abgeschlossenen Messumfelds angeordnet ist, ermittelt und gespeichert werden kann, wobei die mindestens eine gemessene temperaturabhängige Messgröße zur Ausgabe von mindestens einer korrespondierenden temperaturkompensierten Messgröße erfindungsgemäß mit dem ermittelten zeitlichen Temperaturverhalten des Bauteils mathematisch korrigiert werden kann.

In vorteilhafter Ausgestaltung des erfindungsgemäßen Verfahrens kann aus dem zeitlichen Temperaturverhalten des Bauteils die Temperaturänderung des Messumfelds und/oder eines im Messumfelds angeordneten Sensors berechnet werden, wobei die mindestens eine gemessene temperaturabhängige Messgröße mathematisch durch die Temperaturänderung korrigiert wird. Die Temperaturänderung des Sensors oder des Messumfelds lässt sich in vorteilhafter Weise unkompliziert durch einen Temperatursensor ermitteln oder bei bekannten Materialeigenschaften mathematisch näherungsweise berechnen. Des Weiteren kann eine mathematische Kompensation der temperaturabhängigen Messgröße in vorteilhafter Weise durch Ersetzen des gemessenen Temperaturwerts durch den über die Temperaturänderung korrigierten Temperaturwert berechnet werden.

In weiterer vorteilhafter Ausgestaltung des erfindungsgemäßen Verfahrens kann eine Platinentemperatur gemessen werden. Die mindestens eine temperaturabhängige gemessene Messgröße und/oder die mindestens eine temperaturkompensierte Messgröße kann durch die Differenz zwischen der gemessenen Platinentemperatur und der Messumfeldtemperatur mathematisch korrigiert werden. Auf diese Weise können weitere Störgrößen, welche zur Verfälschung des Messergebnisses führen können, ausgeschlossen werden.

In alternativer Ausgestaltung des erfindungsgemäßen Verfahrens kann die gemessene Platinentemperatur abgespeichert werden, wobei aus der aktuell ermittelten Platinentemperatur und einer vorher ermittelten und gespeicherten Platinentemperatur die Temperaturänderung zwischen den beiden Messzeitpunkten berechnet werden kann. Auf diese Weise können die Temperaturänderung zur Temperaturkompensation in vorteilhafter Weise direkt ermittelt, und Fehler in vorteilhafter Weise vermieden werden, welche bei einer mathematischen Näherung auftreten können.

In weiterer vorteilhafter Ausgestaltung des erfindungsgemäßen Verfahrens zur Temperaturkompensation kann aus der mindestens einen temperaturkompensierten Messgröße mindestens eine weitere Größe vorzugsweise eine relative Luftfeuchtigkeit und/oder eine Beschlagswahrscheinlichkeit für eine Windschutzscheibe ermittelt werden. In vorteilhafter Weise kann der Zusammenhang zwischen der relativen Luftfeuchtigkeit und der Feuchteänderung über die Temperatur als lineare Funktion beschrieben werden. Des Weiteren kann auch der Zusammenhang zwischen der Temperaturänderung und der Feuchteänderung durch eine lineare Funktion beschrieben werden. Somit kann die temperaturkompensierte relative Luftfeuchtigkeit in vorteilhafter Weise über einfache mathematische Funktionen berechnet werden.

In weiterer vorteilhafter Ausgestaltung des erfindungsgemäßen Verfahrens zur Temperaturkompensation können Regentropfen und/oder Licht und/oder Feuchtigkeit und/oder Temperatur auf bzw. an einer Windschutzscheibe über mindestens einen Sensor bestimmt und/oder detektiert und/oder korrigiert und/oder kompensiert werden, wobei die korrespondierenden Sensoren unabhängig voneinander aktiviert werden können. Auf diese Weise können in vorteilhafter Weise nahezu alle sicherheitsrelevanten Einflüsse durch eine Sensoreinheit ermittelt und geeignete Gegenmaßnahmen ergriffen werden. So können beispielsweise Scheibenwischer und/oder ein Lüftergebläse und/oder Lichtfunktionen wie Abblendlicht, Fernlicht, Nebelrückleuchte, Nebellicht usw. aktiviert werden. Des Weiteren können Messergebnisse, welche durch den Betrieb eines anderen Sensors verfälscht werden, durch das beschriebene Verfahren in vorteilhafter Weise korrigiert werden. Beispielsweise kann ein Regensensor durch eine verwendete Infrarotleuchtdiodenanordnung eine Temperaturerhöhung der Windschutzscheibe im Messumfeld bewirken. Aufgrund der erhöhten Temperatur im Messumfeld misst der Feuchtigkeitssensor einen geringeren Feuchtigkeitswert. Dieser gemessene Feuchtigkeitswert entspricht nicht dem Wert der Feuchtigkeit in den andern Bereichen der Windschutzscheibe außerhalb des Messumfelds. Durch den bekannten Temperaturverlauf des aktivierten Regensensors können die Temperaturerhöhung im Messumfeld bestimmt und der gemessene Feuchtigkeitswert korrigiert werden. Dadurch kann beispielsweise ein Beschlagrisiko der Windschutzscheibe korrekt ermittelt und zur Gebläsesteuerung ausgegeben werden.

Die erfindungsgemäße Vorrichtung zur Temperaturkompensation von mindestens einer temperaturabhängigen Messgröße, welche von einem in einer Sensoreinheit intergierten Sensor in einem Messumfeld eines Objekts gemessen wird, umfasst eine Auswerte- und Steuereinheit, wobei eine ungewollte Temperaturänderung das mindestens eine im Messumfeld gemessene Messergebnis verfälscht. Erfindungsgemäß ist das zeitliche Temperaturverhalten eines Bauteils, welches innerhalb des abgeschlossenen Messumfelds angeordnet ist und die ungewollte Temperaturänderung des Messumfelds bewirkt, als mindestens eine Kennlinie in einer Speichereinheit hinterlegt, und die Auswerte- und Steuereinheit korrigiert die mindestens eine vom Sensor gemessene temperaturabhängige Messgröße mit der mindestens einen Kennlinie des Bauteils mathematisch. Des Weiteren gibt die Auswerte- und Steuereinheit die mindestens eine temperaturabhängige Messgröße als mindestens eine korrespondierende temperaturkompensierten Messgröße aus. In vorteilhafter Weise können somit anordnungsbedingte Temperaturstörgrößen erfasst und deren Auswirkungen minimiert werden.

In vorteilhafter Ausgestaltung der erfindungsgemäßen Vorrichtung kann ein Temperatursensor eine Platinentemperatur bestimmen und an die Auswerte- und Steuereinheit ausgeben, wobei die Auswerte- und Steuereinheit aus der Temperaturdifferenz zwischen einer aktuell ermittelten Platinentemperatur und einer vorherigen gespeicherten Platinentemperatur die Temperaturänderung ermitteln und/oder aus der Differenz zwischen der bestimmten Platinentemperatur und einer gemessenen Messumfeldtemperatur einen weiteren Korrekturfaktor ermitteln kann. In vorteilhafter Weise können durch einen Temperatursensor die mathematischen Nährungen gegebenenfalls korrigiert werden, um die Näherungsfehler zu minimieren.

In weiterer vorteilhafter Ausgestaltung der erfindungsgemäßen Vorrichtung umfasst die Sensoreinheit einen Regensensor und/oder einen Lichtsensor und/oder einen Feuchtigkeitssensor und/oder Temperatursensor, wobei die Sensoren korrespondierende Messgrößen in dem Messumfeld einer Windschutzscheibe messen und/oder detektieren. Des Weiteren können die einzelnen Sensoren unabhängig voneinander aktiviert werden. Auf diese Weise können in vorteilhafter Weise nahezu alle äußeren Einflüsse auf eine Windschutzschiebe durch eine Sensoreinheit ermittelt und/oder detektiert werden. Durch die Temperaturkompensation können Messfehler, welche durch das Temperaturverhalten von anderen in der Sensoreinheit aktiven Sensoren verursacht werden, eliminiert werden.

In weiterer vorteilhafter Ausgestaltung der erfindungsgemäßen Vorrichtung ermittelt die Auswerte und Steuereinheit aus dem ermittelten temperaturkompensierten Feuchtigkeitswert und dem ermittelten temperaturkompensierten Temperaturwert einen relativen Luftfeuchtigkeitswert, wobei die Auswerte- und Steuereinheit aus dem ermittelten relativen Luftfeuchtigkeitswert einen Wahrscheinlichkeitswert ermittelt, mit welchem die Windschutzscheibe beschlägt. Auf diese Weise können das Beschlagsrisiko genauer bestimmt und erforderliche Maßnahmen rechtzeitig ergriffen werden, um ein Beschlagen der Windschutzscheibe zu vermeiden.

Nachfolgend wird ein Ausführungsbeispiel der Erfindung anhand einer zeichnerischen Darstellung näher erläutert. In der Zeichnung bezeichnen gleiche Bezugszeichen Komponenten bzw. Elemente, die gleiche bzw. analoge Funktionen ausführen.

In der Darstellung zeigt:

Fig. 1    Ein schematisches Blockschaltbild eines Ausführungsbeispiels einer erfindungsgemäßen Vorrichtung zur Temperaturkompensation von temperaturabhängigen Messgrößen für ein Fahrzeug.

Fig. 2    Ein erweitertes schematisches Blockschaltbild des Ausführungsbeispiels der erfindungsgemäßen Vorrichtung zur Temperaturkompensation von temperaturabhängigen Messgrößen für ein Fahrzeug aus Fig. 1.

Fig. 3    Ein Kennliniendiagramm mit mehreren erfassten Temperaturkennlinien.

Fig. 4    Ein Kennliniendiagramm mit mehreren erfassten Kennlinien der relativen Luftfeuchtigkeit.

Fig. 5    Ein Flussdiagramm eines Ausführungsbeispiels eines erfindungsgemäßen Verfahrens zur Temperaturkompensation von mindestens einer temperaturabhängigen Messgröße.

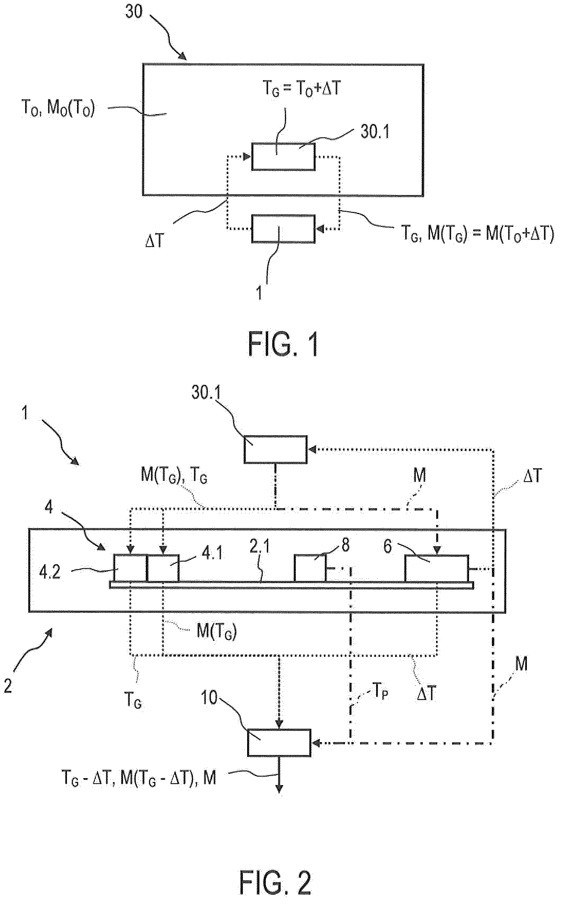

Wie aus Fig. 1 und 2 ersichtlich ist, wird mindestens eine temperaturabhängige Messgröße $M(T_O)$, $T_O$ in einem abgeschlossenen Messumfeld 30.1 eines Objekts 30 durch einen in einer Sensoreinheit 1 intergierten Sensor 4 gemessen. Die Sensoreinheit 1 ist vorzugsweise im Bereich des Messumfelds 30.1 an dem Objekt 30 befestigt. Ein Bauteil 6, welches innerhalb des abgeschlossenen Messumfelds 30.1 angeordnet ist, bewirkt eine ungewollte Temperaturänderung $\Delta T$ des Messumfelds 30.1, wodurch das Messergebnis der temperaturabhängigen Messgröße $M(T_O)$, $T_O$ verfälscht wird. Bei dem Objekt 30 kann es sich beispielsweise um eine Windschutzscheibe eines Fahrzeugs handeln, an welcher ein aktueller Feuchtigkeitswert und ein aktueller Temperaturwert ermittelt und zur Bestimmung eines relativen Luftfeuchtigkeitswert ausgewertet werden sollen, um ein Beschlagsrisiko der Windschutzscheibe 30 abschätzen zu können. Daher werden die korrespondierenden Messwerte stellvertretend für die gesamte Windschutzscheibe 30 in dem abgeschlossen Messumfeld 30.1 ermittelt.

Durch den Betrieb der Sensoreinheit 1 ist die im Messumfeld 30.1 gemessene Temperatur $T_G$ in der Regel höher als die tatsächliche Temperatur $T_O$ an der Windschutzscheibe 30 außerhalb des Messumfelds 30.1. Des Weiteren ist auch die im Messumfeld 30.1 gemessene Feuchtigkeit und die daraus ermittelte relative Luftfeuchtigkeit $M(T_G)$ durch die im Messumfeld 30.1 erhöhte Temperatur $T_G=T_O+\Delta T$ verfälscht, so dass innerhalb des Messumfeld 30.1 ein Feuchtigkeitswert gemessen wird, welcher geringer als ein außerhalb des Messumfelds 30.1 an der Windschutzscheibe 30 tatsächlich vorliegender Feuchtigkeitswert ist. Das bedeutet, dass die verfälschte relative Luftfeuchtigkeit $M(T_G)$, welche aus dem innerhalb des Messumfelds 30.1 erfassten Feuchtigkeitswert ermittelt wird, ebenfalls geringer ist, als die tatsächliche relative Luftfeuchtigkeit $M(T_0)$, welche aus dem außerhalb des Messumfelds 30.1 an der Windschutzscheibe 30 tatsächlich vorliegenden Feuchtigkeitswert ermittelt wird.

Wie aus Fig. 2 weiter ersichtlich ist, umfasst die dargestellte Sensoreinheit 1 an der Windschutzscheibe 30 mindestens ein Sensorbauteil 2 mit einer Platine 2.1, auf welcher mindestens ein Sensor 4, welcher als kombinierter Sensor mit einem Temperatursensorelement 4.1 und einem Feuchtesensorelement 4.2 ausgeführt ist, und ein wärmeerzeugendes Bauteil 6 angeordnet sind. Die erzeugten Sensorsignale, welche die Messgrößen repräsentieren, werden an eine Auswerte- und Steuereinheit 10 ausgegeben.

Erfindungsgemäß ist das zeitliche Temperaturverhalten des wärmeerzeugenden Bauteils 6, welches innerhalb des abgeschlossenen Messumfelds 30.1 auf der Platine 2.1, des Sensorbauteils 2 der Sensoreinheit 1 angeordnet ist und die ungewollte Temperaturänderung $\Delta T$ des Messumfelds 30.1 bewirkt, als mindestens eine Kennlinie in einer Speichereinheit der Auswerte und Steuereinheit 10 hinterlegt. Hierbei korrigiert die Auswerte- und Steuereinheit 10 die mindestens eine vom Sensor 4 gemessene temperaturabhängige Messgröße $M(T_G)$, $T_G$ mit der mindestens einen Kennlinie des Bauteils 6 mathematisch und gibt die mindestens eine temperaturabhängige Messgröße $M(T_G)$, $T_G$ als mindestens eine korrespondierende temperaturkompensierten Messgröße ($M(T_G\text{-}\Delta T)$, $T_G\text{-}\Delta T$) aus.

Wie aus Fig. 2 weiter ersichtlich ist, umfasst die dargestellte Sensoreinheit 1 einen weiteren Temperatursensor 8, welcher eine Platinentemperatur $T_P$ bestimmt und an die Auswerte- und Steuereinheit 10 ausgibt. Die Auswerte- und Steuereinheit 10 kann aus der Temperaturdifferenz zwischen einer aktuell ermittelten Platinentemperatur $T_P$ und einer vorherigen gespeicherten Platinentemperatur die Temperaturänderung $\Delta T$ im Messumfeld 30.1 zur Korrektur ermitteln. Zusätzlich oder alternativ kann die Auswerte- und Steuereinheit 10 aus der Temperaturdifferenz $\Delta T_P$ zwischen der aktuellen Platinentemperatur $T_P$ und der gemessenen Messumfeldtemperatur $T_G$ einen weiteren Korrekturfaktor ermitteln. Zur Berechnung der temperaturkompensierten Temperatur zieht die Auswerte- und Steuereinheit 10 von der gemessenen Temperatur $T_G$ die ermittelte Temperaturänderung $\Delta T$ ab.

Wie aus Fig. 2 weiter ersichtlich ist, ist das wärmeerzeugende Bauteil 6 ein Regensensor, welcher eine nicht temperaturabhängige Messgröße $M$ erfasst, welche beispielsweise dahingehend ausgewertet wird, ob Regentropfen auf der Windschutzscheibe 30 vorhanden sind. Der aktivierte Regensensor 6 heizt das Messumfeld 30.1 durch den Betrieb einer Infrarotleuchtdiodenanordnung auf. Daher wird die Messung der temperaturabhängigen Messgröße $M(T_G)$, $T_G$ verfälscht, wenn der Regensensor 6 aktiviert wird.

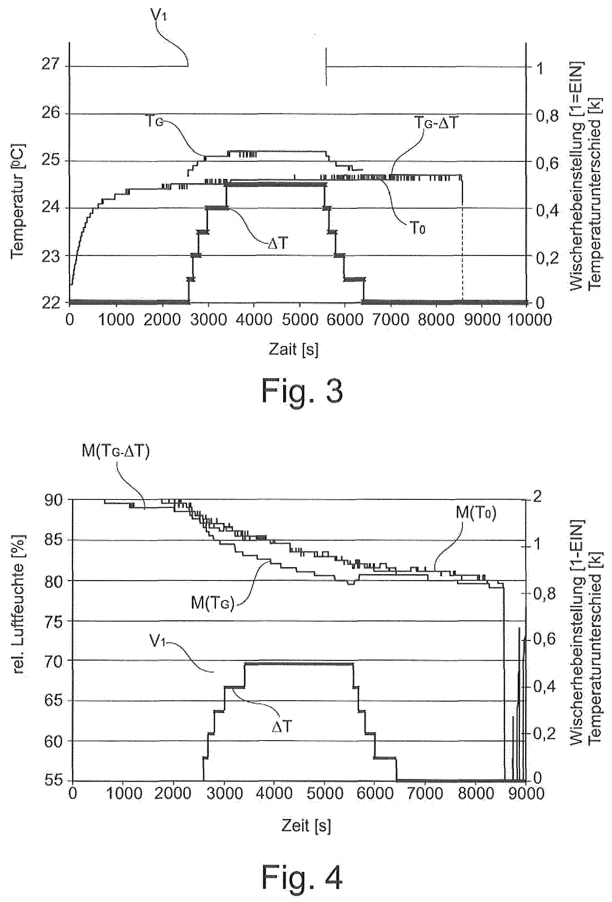

In Fig. 3 sind verschiedene Temperaturverläufe, wie die Temperaturänderung $\Delta T$ im Messumfeld 30.1, der Temperaturverlauf $T_G$ im Messumfeld 30.1, der Temperaturverlauf $T_0$ an der Windschutzscheibe 30 außerhalb des Messumfelds 30.1 und ein kompensierter Temperaturverlauf $T_G\text{-}\Delta T$ sowie ein Aktivierungszustand V1 des Regensensors 6 als wärmeerzeugendes Bauteil über der Zeit aufgetragen. Die Temperaturänderung $\Delta T$ im Messumfeld 30.1 kann aus den Materialeigenschaften und aus der gespeicherten Kennlinie des zeitlichen Temperaturverhaltens des Regensensors 6 berechnet und/oder gemessen werden.

Wie aus Fig. 3 ersichtlich ist, steigt die Temperatur $T_G$ bzw. die Temperaturänderung $\Delta T$ im Messumfeld 30.1 nach dem Einschaltvorgang des Regensensors 6 bis zu einem Maximum an und bleibt nach Erreichen des Maximums konstant, um nach dem Abschaltvorgang des Regensensors 6 wieder abzusinken. Der durch die Temperaturänderung $\Delta T$ im Messumfeld 30.1 beeinflusste Verlauf der gemessenen Temperatur $T_G$ kann durch die ermittelte Temperaturänderung $\Delta T$ kompensiert werden. Der kompensierte Temperaturverlauf $T_G\text{-}\Delta T$ ist ebenfalls dargestellt. Wie aus Fig. 3 weiter ersichtlich ist, gleicht der kompensierte Temperaturverlauf $T_G\text{-}T_0$ im Wesentlichen dem unverfälschten Temperaturverlauf $T_O$ an der Windschutzscheibe 30 außerhalb des Messumfelds 30.1.

In Fig. 4 sind verschiedene Verläufe der relativen Luftfeuchtigkeit, wie ein Verlauf der relativen Luftfeuchtigkeit $M(T_G)$ im Messumfeld 30.1, der Verlauf der relativen Luftfeuchtigkeit $M(T_0)$ an der Windschutzscheibe 30 außerhalb des Messumfelds 30.1 und ein kompensierter Verlauf der relativen Luftfeuchtigkeit $M(T_G\text{-}\Delta T)$, die Temperaturänderung $\Delta T$ im Messumfeld 30.1 sowie ein Aktivierungszustand V1 des Regensensors 6 als wärmeerzeugendes Bauteil über der Zeit aufgetragen. Die aus den verfälschten Sensordaten ermittelte relative Luftfeuchte $M(T_G)$ nimmt ab, wenn der Regensensor 6 aktiviert ist. Durch die mathematische Kompensation erhält man eine kompensierte Messkurve $M(T_G\text{-}\Delta T)$, welche nahezu dem unverfälschten Verlauf der relativen Luftfeuchtigkeit $M(T_0)$ an der Windschutzscheibe 30 außerhalb des Messumfelds 30.1 entspricht.

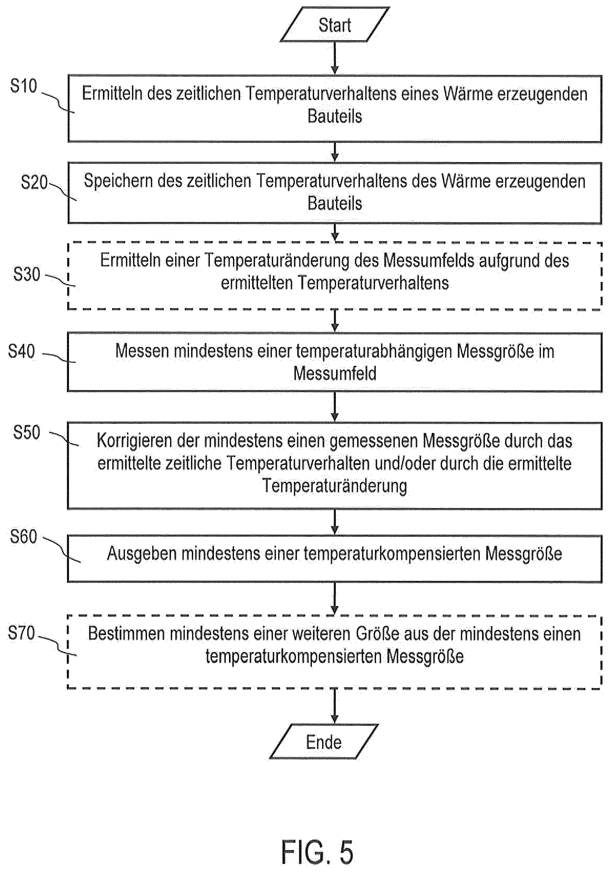

Wie aus Fig. 5 ersichtlich ist, wird bei dem dargestellten erfindungsgemäßen Verfahren zur Temperaturkompensation von mindestens einer temperaturabhängigen Messgröße $M(T_G)$, in einem Verfahrensschritt S10 ein zeitliches Temperaturverhalten eines wärmeerzeugenden Bauteils 6 ermittelt. Dies kann beispielsweise einmalig vor dem Einbau ins Fahrzeug oder während des Messbetriebs geschehen. In einem Verfahrensschritt S20 wird dann das ermittelte Temperaturverhalten des wärmeerzeugenden Bauteils 6 als mindestens eine Kennlinie gespeichert.

Im dargestellten Ausführungsbeispiel wird in einem gestrichelt dargestellten optionalen Verfahrensschritt S30 die Temperaturänderung $\Delta T$ des Messumfelds 30.1, welche durch die Wärmeenergie des Bauteils 6 erzeugt wird, aus dem bekannten Temperaturverhalten des Bauteils 6 ermittelt und gespeichert.

Im Verfahrensschritt S40 wird die mindestens eine temperaturabhängige Messgröße $M(T_G)$ im Messumfeld 30.1 ermittelt. Des Weiteren können auch andere Messgrößen $M$ erfasst bzw. ermittelt werden, welche nicht von der Temperatur abhängig sind.

Im Verfahrensschritt S50 wird die mindestens eine gemessene temperaturabhängige Messgröße $M(T_G)$ durch das zeitliche Temperaturverhalten und/oder durch die ermittelte Temperaturänderung $\Delta T$ korrigiert. Im dargestellten Ausführungsbeispiel wird beispielsweise die relative Luftfeuchtigkeit $M(T_G)$ gemessen bzw. ermittelt, wobei die Korrektur bzw. die Temperaturkompensation über die folgenden Näherungen gemäß Gleichung (1) bis (3) erfolgt.

$$F_{komp} \cong M(T_G - \Delta T) = F_G + \Delta F \qquad (1)$$

Gleichung (1) zeigt den prinzipiellen Zusammenhang zwischen der verfälschten relativen Luftfeuchtigkeit $F_G$, den durch die ungewollte Temperaturänderung $\Delta T$ bewirkten ungewollte Feuchteänderung $\Delta F$ und dem Verlauf der kompensierten relativen Luftfeuchtigkeit $F_{komp}$.

$$X = \frac{\left(a * T_G^2 + b * T_G + c\right)}{2500} \qquad (2)$$

Gleichung (2) zeigt eine vereinfachte quadratische Näherung, wobei X ein Zwischenergebnis mit a=-1, b=165, c=-18568 repräsentiert, welches in der endgültigen Gleichung (3) für die zu ermittelnde Feuchteänderung $\Delta F$ eingesetzt wird. Die Parameter a, b, c wurden beispielhaft für die dargestellten Kennlinienverläufe der verwendeten Sensoren bestimmt.

$$\Delta F = X * \left(\frac{F_G}{100\%}\right) * \Delta T \qquad (3)$$

Gleichung (3) kann zur endgültigen Berechnung der zu ermittelnden Feuchteänderung $\Delta F$ eingesetzt werden, um einen aktuellen relativen Luftfeuchtigkeitswert zu bestimmen und auszuwerten.
Im Verfahrensschritt S60 wird die temperaturkompensierte Messgröße $M(T_G - \Delta T)$ bzw. $F_{komp}$ ausgegeben.
Im gestrichelt dargestellten optionalen Verfahrensschritt S70 wird eine weitere Größe aus der mindestens einen temperaturabhängigen Messgröße bestimmt. Dies kann beispielsweise ein Wahrscheinlichkeitswert für den Beschlag der Windschutzscheibe 30 sein, welcher aus der relativen Luftfeuchtigkeit und aus dem kompensierten Temperaturverlauf $T_G - \Delta T$ ermittelt werden kann. Auf diese Weise kann ein entsprechendes Steuersignal an einen Gebläselüfter ausgegeben werden, welcher durch die Zufuhr von Frischluft ein Beschlagen der Windschutzscheibe 30 verhindern kann.
Ausführungsformen der vorliegenden Erfindung ermöglichen in vorteilhafter Weise eine Kompensation von temperaturabhängigen Messgrößen, wobei die Beeinflussung von thermischen Störgrößen minimiert und ein genaueres Messergebnis ermittelt werden können.

**Patentansprüche**

1. Verfahren zur Temperaturkompensation von mindestens einer temperaturabhängigen Messgröße (M(T), T), welche in einem Messumfeld (30.1) gemessen wird, wobei durch eine ungewollte Temperaturänderung ($\Delta T$) das mindestens eine im Messumfeld (30.1) gemessene Messergebnis (M($T_G$), $T_G$) verfälscht wird,
   **dadurch gekennzeichnet,**
   **dass** das zeitliche Temperaturverhalten eines die ungewollte Temperaturänderung ($\Delta T$) bewirkenden Bauteils (6), welches innerhalb des abgeschlossenen Messumfelds (30.1) angeordnet ist, ermittelt und gespeichert wird, wobei die mindestens eine gemessene temperaturabhängige Messgröße (M($T_G$), $T_G$) zur Ausgabe von mindestens einer korrespondierenden temperaturkompensierten Messgröße (M($T_G - \Delta T$), $T_G - \Delta T$) mit dem ermittelten zeitlichen Temperaturverhalten des Bauteils (6) mathematisch korrigiert wird.

2. Verfahren nach Anspruch 1,
   **dadurch gekennzeichnet,**
   **dass** aus dem zeitlichen Temperaturverhalten des Bauteils (6) die Temperaturänderung ($\Delta T$) des Messumfelds (30.1) und/oder eines im Messumfeld (30.1) angeordneten Sensors (4) berechnet wird, wobei die mindestens eine gemessene temperaturabhängige Messgröße (M($T_G$), $T_G$) mathematisch durch die Temperaturänderung ($\Delta T$) korrigiert wird.

3. Verfahren nach Anspruch 1 oder 2,
   **dadurch gekennzeichnet,**
   **dass** eine Platinentemperatur ($T_P$) gemessen wird, wobei die mindestens eine temperaturabhängige gemessene Messgröße (M($T_G$), $T_G$) und/oder die mindestens eine temperaturkompensierte Messgröße (M($T_G - \Delta T$), $T_G - \Delta T$) durch die Differenz ($\Delta T_P$) zwischen der gemessenen Platinentemperatur ($T_P$) und der Messumfeldtemperatur mathematisch korrigiert wird.

4. Verfahren nach Anspruch 2 oder 3,
   **dadurch gekennzeichnet,**
   **dass** die gemessene Platinentemperatur ($T_P$) abspeichert wird, wobei aus der aktuell ermittelten Platinentemperatur ($T_P$) und einer gespeicherten Platinentemperatur die Temperaturänderung ($\Delta T$) berechnet wird.

5. Verfahren nach einem der vorgehenden Ansprüche 1 bis 4,
   **dadurch gekennzeichnet,**
   **dass** aus der mindestens einen temperaturkompensierten Messgröße ($M(T_G$-$\Delta T)$, $T_G$-$\Delta T$) mindestens eine weitere Größe vorzugsweise eine relative Luftfeuchtigkeit und/oder eine Beschlagswahrscheinlichkeit für eine Windschutzscheibe ermittelt wird.

6. Verfahren nach einem der vorgehenden Ansprüche 1 bis 5,
   **dadurch gekennzeichnet,**
   **dass** Regentropfen und/oder Licht und/oder Feuchtigkeit und Temperatur auf bzw. an einer Windschutzscheibe über mindestens einen Sensor (4. 4.1, 4.2, 6) bestimmt und/oder detektiert und/oder korrigiert und/oder kompensiert werden, wobei mehrere Sensoren (4, 4.1, 4.2, 6) unabhängig voneinander aktiviert werden.

7. Vorrichtung zur Temperaturkompensation eines in einer Sensoreinheit (1) intergierten Sensors (4), welcher mindestens eine temperaturabhängige Messgröße ($M(T)$, $T$) in einem Messumfeld (30.1) eines Objekts (30) misst, wobei eine ungewollte Temperaturänderung ($\Delta T$) das mindestens eine im Messumfeld (30.1) gemessene Messergebnis ($M(T_G)$, $T_G$) verfälscht,
   **dadurch gekennzeichnet,**
   **dass** das zeitliche Temperaturverhalten eines Bauteils (6), welches innerhalb des abgeschlossenen Messumfelds (30.1) angeordnet ist und die ungewollte Temperaturänderung ($\Delta T$) des Messumfelds (30.1) bewirkt, als mindestens eine Kennlinie in einer Speichereinheit hinterlegt ist, wobei eine Auswerte- und Steuereinheit (10) die mindestens eine vom Sensor (1) gemessene temperaturabhängige Messgröße ($M(T_G)$, $T_G$) mit der mindestens einen Kennlinie des Bauteils (6) mathematisch korrigiert und die mindestens eine temperaturabhängige Messgröße als mindestens eine korrespondierende temperaturkompensierten Messgröße ($M(T_G$-$\Delta T)$, $T_G$-$\Delta T$) ausgibt.

8. Vorrichtung zur Temperaturkompensation nach Anspruch 7,
   **dadurch gekennzeichnet,**
   **dass** ein Temperatursensor (8) die Platinentemperatur ($T_P$) bestimmt und an die Auswerte- und Steuereinheit (10) ausgibt, wobei die Auswerte- und Steuereinheit (10) aus der Temperaturdifferenz zwischen einer aktuell ermittelten Platinentemperatur ($T_P$) und einer vorherigen gespeicherten Platinentemperatur die Temperaturänderung ($\Delta T$) ermittelt und/oder aus der Temperaturdifferenz ($\Delta T_P$) zwischen der bestimmten Platinentemperatur ($T_P$) und einer gemessenen Messumfeldtemperatur ($T_G$) einen weiteren Korrekturfaktor ermittelt.

9. Vorrichtung nach Anspruch 7 oder 8,
   **dadurch gekennzeichnet,**
   **dass** die Sensoreinheit (1) einen Regensensor (6) und/oder einen Lichtsensor und/oder einen Feuchtigkeitssensor (4.1) und/oder einen Temperatursensor (4.2) aufweist, wobei die Sensoren (4.1, 4.2, 6) korrespondierende Größen in dem Messumfeld (30.1) einer Windschutzscheibe messen und/oder detektieren, wobei die Sensoren (4.1, 4.2, 6) unabhängig voneinander aktivierbar sind.

10. Vorrichtung zur Temperaturkompensation nach einem der vorgehenden Ansprüche 7 bis 9,
    **dadurch gekennzeichnet,**
    **dass** die Auswerte und Steuereinheit (10) aus dem ermittelten temperaturkompensierten Feuchtigkeitswert und dem ermittelten temperaturkompensierten Temperaturwert ($T_G$-$\Delta T$) einen relativen Luftfeuchtigkeitswert ermittelt, wobei die Auswerte- und Steuereinheit (10) aus dem ermittelten relativen Luftfeuchtigkeitswert einen Wahrscheinlichkeitswert ermittelt, mit welchem die Windschutzscheibe beschlägt.

**Claims**

1. Method for compensating for the temperature of at least one temperature-dependent measurement variable ($M(T)$, $T$) which is measured in a measurement environment (30.1), the at least one measurement result ($M(T_G)$, $T_G$)

measured in the measurement environment (30.1) being distorted by an unwanted temperature change ($\Delta T$),
**characterized**
**in that** the temporal temperature behaviour of a component (6) which is arranged inside the closed measurement environment (30.1) and causes the unwanted temperature change (AT) is determined and stored, the at least one measured temperature-dependent measurement variable ($M(T_G)$, $T_G$) being mathematically corrected using the determined temporal temperature behaviour of the component (6) in order to output at least one corresponding temperature-compensated measurement variable ($M(T_G\text{-}\Delta T)$, $T_G\text{-}\Delta T$).

**2.** Method according to Claim 1,
**characterized**
**in that** the temperature change (AT) of the measurement environment (30.1) and/or of a sensor (4) arranged in the measurement environment (30.1) is calculated from the temporal temperature behaviour of the component (6), the at least one measured temperature-dependent measurement variable ($M(T_G)$, $T_G$) being mathematically corrected by means of the temperature change (AT).

**3.** Method according to Claim 1 or 2,
**characterized**
**in that** a printed circuit board temperature ($T_P$) is measured, the at least one temperature-dependent measured measurement variable ($M(T_G)$, $T_G$) and/or the at least one temperature-compensated measurement variable ($M(T_G\text{-}\Delta T)$, $T_G\text{-}\Delta T$) being mathematically corrected by means of the difference ($\Delta T_P$) between the measured printed circuit board temperature ($T_P$) and the measurement environment temperature.

**4.** Method according to Claim 2 or 3,
**characterized**
**in that** the measured printed circuit board temperature ($T_P$) is stored, the temperature change (AT) being calculated from the currently determined printed circuit board temperature ($T_P$) and a stored printed circuit board temperature.

**5.** Method according to one of the preceding Claims 1 to 4,
**characterized**
**in that** at least one further variable, preferably a relative humidity and/or a fogging probability for a windscreen, is determined from the at least one temperature-compensated measurement variable ($M(T_G\text{-}\Delta T)$, $T_G\text{-}\Delta T$).

**6.** Method according to one of the preceding Claims 1 to 5,
**characterized**
**in that** raindrops and/or light and/or moisture and temperature on or at a windscreen is/are determined and/or detected and/or corrected and/or compensated using at least one sensor (4, 4.1, 4.2, 6), a plurality of sensors (4, 4.1, 4.2, 6) being activated independently of one another.

**7.** Apparatus for compensating for the temperature of a sensor (4) which is integrated in a sensor unit (1) and measures at least one temperature-dependent measurement variable ($M(T)$, $T$) in a measurement environment (30.1) of an object (30), an unwanted temperature change (AT) distorting the at least one measurement result ($M(T_G)$, $T_G$) measured in the measurement environment (30.1),
**characterized**
**in that** the temporal temperature behaviour of a component (6) which is arranged inside the closed measurement environment (30.1) and causes the unwanted temperature change (AT) of the measurement environment (30.1) is stored as at least one characteristic curve in a storage unit, an evaluation and control unit (10) mathematically correcting the at least one temperature-dependent measurement variable ($M(T_G)$, $T_G$) measured by the sensor (1) using the at least one characteristic curve of the component (6) and outputting the at least one temperature-dependent measurement variable as at least one corresponding temperature-compensated measurement variable ($M(T_G\text{-}\Delta T)$, $T_G\text{-}\Delta T$).

**8.** Apparatus for temperature compensation according to Claim 7,
**characterized**
**in that** a temperature sensor (8) determines the printed circuit board temperature ($T_P$) and outputs it to the evaluation and control unit (10), the evaluation and control unit (10) determining the temperature change (AT) from the temperature difference between a currently determined printed circuit board temperature ($T_P$) and a previous stored printed circuit board temperature and/or determining a further correction factor from the temperature difference ($\Delta T_P$) between the determined printed circuit board temperature ($T_P$) and a measured measurement environment temperature ($T_G$).

9. Apparatus according to Claim 7 or 8,
   **characterized**
   **in that** the sensor unit (1) has a rain sensor (6) and/or a light sensor and/or a moisture sensor (4.1) and/or a temperature sensor (4.2), the sensors (4.1, 4.2, 6) measuring and/or detecting corresponding variables in the measurement environment (30.1) of a windscreen, the sensors (4.1, 4.2, 6) being able to be activated independently of one another.

10. Apparatus for temperature compensation according to one of the preceding Claims 7 to 9,
    **characterized**
    **in that** the evaluation and control unit (10) determines a relative humidity value from the determined temperature-compensated moisture value and the determined temperature-compensated temperature value ($T_G$-$\Delta T$), the evaluation and control unit (10) determining a probability value, with which the windscreen is fogged, from the determined relative humidity value.

**Revendications**

1. Procédé de compensation en température d'au moins une grandeur de mesure (M(T), T) dépendant de la température, qui est mesurée dans un environnement de mesure (30.1), dans lequel l'au moins un résultat de mesure (M($T_G$), $T_G$) mesuré dans l'environnement de mesure (30.1) est perturbé par une variation de température indésirable ($\Delta T$),
   **caractérisé en ce que** le comportement temporel en température d'un composant (6) provoquant la variation de température indésirable ($\Delta T$) et qui est disposé à l'intérieur de l'environnement de mesure fermé (30.1), est déterminée et stockée,
   dans lequel l'au moins une grandeur de mesure mesurée dépendant de la température (M($T_G$), $T_G$) est corrigée mathématiquement conformément au comportement temporel en température déterminé du composant (6) pour délivrer au moins une grandeur de mesure compensée en température (M($T_G$-$\Delta T$), $T_G$-$\Delta T$) correspondante.

2. Procédé selon la revendication 1,
   **caractérisé en ce que** la variation de température ($\Delta T$) de l'environnement de mesure (30.1) et/ou d'un capteur (4) disposé dans l'environnement de mesure (30.1) est calculée à partir du comportement temporel en température du composant (6), dans lequel l'au moins une grandeur de mesure mesurée dépendant de la température (M($T_G$), $T_G$) est corrigée mathématiquement conformément à la variation de température ($\Delta T$).

3. Procédé selon la revendication 1 ou 2,
   **caractérisé en ce qu'**une température de carte ($T_P$) est mesurée, dans lequel l'au moins une grandeur de mesure mesurée dépendant de la température (M($T_G$), $T_G$) et/ou l'au moins une grandeur de mesure compensée en température (M($T_G$-$\Delta T$), $T_G$-$\Delta T$) est corrigée mathématiquement conformément à la différence ($\Delta T$) entre la température de carte mesurée ($T_P$) et la température de l'environnement de mesures.

4. Procédé selon la revendication 2 ou 3,
   **caractérisé en ce que** la température de carte mesurée ($T_P$) est stockée, dans lequel la variation de température ($\Delta T$) est calculée à partir de la température de carte actuelle déterminée ($T_P$) et d'une température de carte stockée.

5. Procédé selon l'une quelconque des revendications 1 à 4 précédentes,
   **caractérisé en ce qu'**au moins une autre grandeur, de préférence une humidité relative de l'air et/ou une probabilité de buée, est déterminée pour un pare-brise à partir de l'au moins une grandeur de mesure compensée en température (M($T_G$-$\Delta T$), $T_G$-$\Delta T$).

6. Procédé selon l'une quelconque des revendications 1 à 5,
   **caractérisé en ce que** des gouttes de pluie et/ou de la lumière et/ou de l'humidité et/ou la température sont déterminées et/ou détectées et/ou corrigées et/ou compensées sur ou au niveau d'un pare-brise par l'intermédiaire d'au moins un capteur (4., 4.1, 4.2, 6), dans lequel plusieurs capteurs (4., 4.1, 4.2, 6) sont activés indépendamment les uns des autres.

7. Dispositif de compensation en température d'un capteur (4) intégré à une unité à capteurs (1), lequel capteur mesure au moins une grandeur de mesure (M(T), T) dans un environnement de mesure (30.1) d'un objet (30), dans lequel une variation de température indésirable ($\Delta$T) perturbe un résultat de mesure (M(T$_G$), T$_G$) mesuré dans l'environnement de mesure (30.1),

**caractérisé en ce que** le comportement temporel en température d'un composant (6) qui est disposé à l'intérieur de l'environnement de mesure (30.1) fermé et qui provoque une variation de température indésirable ($\Delta$T) de l'environnement de mesure (30.1), est enregistré dans une unité à mémoire sous la forme d'au moins une courbe caractéristique, dans lequel l'unité d'évaluation et de commande (10) corrige mathématiquement l'au moins une grandeur de mesure dépendant de la température (M(T$_G$), T$_G$) mesurée par le capteur (1) conformément à l'au moins une courbe caractéristique du composant (6) et délivre l'au moins une grandeur de mesure dépendant de la température sous la forme d'une grandeur de mesure compensée en température correspondante (M(T$_G$-$\Delta$T), T$_G$-$\Delta$T).

8. Dispositif de compensation en température selon la revendication 7,
**caractérisé en ce qu'**un capteur de température (8) détermine la température de carte (T$_P$) et la délivre à l'unité d'évaluation et de commande (10), dans lequel l'unité d'évaluation et de commande (10) détermine la variation de température ($\Delta$T) à partir de la différence de température entre une température de carte actuelle déterminée (T$_P$) et une température de carte préalablement stockée et/ou un autre facteur de correction à partir de la différence de température ($\Delta$T$_P$) entre la température de carte déterminée (T$_P$) et une température mesurée (T$_G$) de l'environnement de mesure.

9. Dispositif selon la revendication 7 ou 8,
**caractérisé en ce que** l'unité à capteurs (1) comporte un capteur de pluie (6) et/ou un capteur de lumière et/ou un capteur d'humidité (4.1) et/ou un capteur de température (4.2), dans lequel les capteurs (4.1, 4.2, 6) mesurent et/ou détectent des grandeurs correspondantes dans l'environnement de mesure (30.1) d'un pare-brise, dans lequel les capteurs (4.1, 4.2, 6) peuvent être activés indépendamment les uns des autres.

10. Dispositif de compensation en température selon l'une quelconque des revendications 7 à 9,
**caractérisé en ce que** l'unité d'évaluation et de commande (10) détermine une valeur d'humidité relative à partir de la valeur d'humidité compensée en température déterminée et de la valeur de température compensée en température déterminée (T$_G$-$\Delta$T), dans lequel l'unité d'évaluation et de commande (10) détermine une valeur de probabilité de buée sur le pare-brise à partir de la valeur d'humidité relative déterminée.

## FIG. 1

## FIG. 2

Fig. 3

Fig. 4

Start

S10 — Ermitteln des zeitlichen Temperaturverhaltens eines Wärme erzeugenden Bauteils

S20 — Speichern des zeitlichen Temperaturverhaltens des Wärme erzeugenden Bauteils

S30 — Ermitteln einer Temperaturänderung des Messumfelds aufgrund des ermittelten Temperaturverhaltens

S40 — Messen mindestens einer temperaturabhängigen Messgröße im Messumfeld

S50 — Korrigieren der mindestens einen gemessenen Messgröße durch das ermittelte zeitliche Temperaturverhalten und/oder durch die ermittelte Temperaturänderung

S60 — Ausgeben mindestens einer temperaturkompensierten Messgröße

S70 — Bestimmen mindestens einer weiteren Größe aus der mindestens einen temperaturkompensierten Messgröße

Ende

# FIG. 5

**IN DER BESCHREIBUNG AUFGEFÜHRTE DOKUMENTE**

**In der Beschreibung aufgeführte Patentdokumente**

- DE 19907401 A1
- DE 102007005544 B4
- DE 102007000407
- US 20080099042 A
- DE 102005006859